# EUROPEAN PATENT SPECIFICATION

(11) **EP 2 525 057 B1**
(45) Date of publication and mention of the grant of the patent: **30.05.2018**
(21) Application number: 11732901.1
(22) Date of filing: 13.01.2011
(51) Int. Cl.: F01N 3/08, F01N 3/18, F01N 3/20, F01N 3/24, F01N 3/28, F02B 37/02, F02B 37/10, F02B 37/22, F02B 37/24, F02D 23/00, F02B 25/04, F02B 29/04, B01D 53/94, B01D 53/90

(54) **EXHAUST-GAS DENITRATION SYSTEM, SHIP EQUIPPED THEREWITH, AND METHOD FOR CONTROLLING EXHAUST-GAS DENITRATION SYSTEM**
ABGAS-DENITRIERUNGSSYSTEM, DAMIT AUGESTATTETES SCHIFF UND VERFAHREN ZUR STEUERUNG DES ABGAS-DENITRIERUNGSSYSTEMS
SYSTÈME DE DÉNITRATION DES GAZ D'ÉCHAPPEMENT, BATEAU ÉQUIPÉ DE CE SYSTÈME ET PROCÉDÉ POUR COMMANDER UN SYSTÈME DE DÉNITRATION DES GAZ D'ÉCHAPPEMENT

(30) Priority: 15.01.2010 JP 2010006830
(43) Date of publication of application: 21.11.2012
(73) Proprietor: Mitsubishi Heavy Industries, Ltd., Tokyo 108-8215 (JP); Japan Engine Corporation, Futami-Cho Akashi-City Hyogo 674-0093 (JP)
(72) Inventor: MURATA, Satoru, Tokyo 108-8215 (JP); UNSEKI, Takashi, Tokyo 108-8215 (JP); HIGUCHI, Jun, Tokyo 108-8215 (JP)
(74) Representative: Hoffmann Eitle
(86) International application number: PCT/JP2011/050391
(87) International publication number: WO 2011/087031

(56) References cited:
- EP-A2- 2 037 091
- WO-A1-2008/135059
- WO-A1-2008/135059
- WO-A2-2006/121993
- DE-A1-102007 038 410
- JP-A- 1 012 027
- JP-A- 2002 221 024
- JP-A- 2002 531 745
- JP-A- 2007 182 805
- JP-A- 2009 013 807
- JP-A- 2009 013 807
- JP-U- H0 454 926
- US-A1- 2004 040 288
- US-A1- 2006 045 835
- US-B1- 6 878 359

## Description

### {Technical Field}

The present invention relates to an exhaust gas denitration system which can be used for a marine two-cycle diesel engine equipped with an exhaust gas turbocharger as well as a diesel engine which exhausts gas at a low temperature, a ship equipped therewith, and a method for controlling the exhaust gas denitration system.

### {Background Art}

Many denitration devices based on a selective catalytic reduction (SCR) method have been used for automobiles or power plants in order to remove nitrogen oxides (NOx) in exhaust gas discharged from an internal combustion engine such as a diesel engine. As a reducing agent of the denitration device, ammonia gas, ammonia water, or urea water is used. However, ammonia has a pungent odor and, except for ammonia water having an ammonia content of 10% or less, is designated as a deleterious substance. Accordingly, when commercially-available ammonia water having an ammonia content of 25 to 30% is used as a reducing agent, special equipment such as a leak detection sensor, a double pipe system, and a ventilator may be required. On the other hand, unlike ammonia, urea water does not have a pungent odor and is not designated as a deleterious substance. Accordingly, the urea water is easier to handle than ammonia because additional equipment is not required. Given a global trend towards strict regulations placed in some sea areas on nitrogen oxides emitted from marine diesel engines, and in order to give first priority to health and safety of crew members, there has been a strong demand for a denitration device of a diesel engine using urea water having a urea content of 32.5%, which is commercially available as a reducing agent for a diesel engine for automobile.

Japanese Unexamined Patent Application, Publication No. 2002-371831, Japanese Unexamined Patent Application, Publication No. 2007-218146, Japanese Unexamined Patent Application, Publication No. 2004-44405 and Japanese Unexamined Patent Application, Publication No. Hei5-285343 disclose a technique using urea water as a reducing agent in a denitration device of a diesel engine for automobile.

Japanese Unexamined Patent Application, Publication No. 2002-371831 and Japanese Unexamined Patent Application, Publication No. 2007-218146 are directed to a diesel engine for automobile. The diesel engine for automobile is a four-cycle engine. Because of its high exhaust gas temperature of at most approximately 450 °C, sufficient conversion of urea water into ammonia can be expected. Thus, Japanese Unexamined Patent Application, Publication No. 2007-218146 and Japanese Unexamined Patent Application, Publication No. 2007-218146 disclose a structure for injecting the urea water into an exhaust tube in front of a metal denitration catalyst such as zeolite.

DE 10 2007 038 410 A1 discloses a reactor which produces ammonia from urea water, a urea water injection nozzle which supplies the urea water into the reactor and an exhaust gas bypass path through which a part of the exhaust gas, which is obtained by partly extracting the exhaust gas of the diesel engine, flows into the reactor.

WO 2008/135059 A1 discloses a supercharged diesel engine with SCR reactor which represents the closest prior art.

### {Summary of Invention}

### {Technical Problem}

In many cases, however, a marine diesel engine equipped with an exhaust gas turbocharger is used as a marine propulsion engine (marine engine).

Unlike the diesel engine for automobile, since such a propulsion engine, for example, a two-cycle diesel engine, has excellent thermal efficiency, the exhaust gas temperature after exhaust gas passes through the exhaust gas turbocharger tends to drop to at most approximately 250°C. A titanium and vanadium catalyst exhibiting high activity at 250 to 420°C, preferably 320 to 400°C is used as a denitration catalyst, which requires time and a preliminary distance for converting urea water into ammonia, and a urea water injection nozzle needs to be upstream of the catalyst exhaust and spaced from the catalyst as far as possible.

When the exhaust gas temperature is low, various solid byproducts such as biuret and cyanuric acid are generated during the conversion of urea water into ammonia. These solid byproducts may be generated in a range from a temperature level (approximately 133°C) at which urea starts to be resolved to a temperature level (320 to 360°C) at which cyanuric acid starts to be resolved.

Japanese Unexamined Patent Application, Publication No. 2004-44405 discloses a phenomenon observed when urea water is injected directly to a denitration catalyst in an exhaust tube as follows: "The urea water dropped from the nozzle is evaporated by the heat of the exhaust gas flowing through the tube when the urea water is dropped, so that ammonia gas is generated in the tube. Then, nitrogen oxide is reduced by the ammonia and is removed in the denitration device. When the flow rate of the exhaust gas and the temperature in the tube are appropriate, the urea water is sufficiently evaporated and diffused inside the tube. On the contrary, when the combustion is weakened in the combustion device, the flow rate of the exhaust gas and the temperature are reduced. Accordingly, the urea water is not appropriately evaporated and is dropped from the nozzle." "When the urea water is dropped from the nozzle, the urea water is solidified at the distal end portion of the nozzle and the nozzle is sometimes closed. When the temperature in the tube is reduced, urea generates byproducts such as cyanuric acid by a polymerization reaction. When the generated cyanuric acid is adhered to the inner wall of the tube, the amount of ammonia serving as a reducing agent of the nitrogen oxide is decreased and therefore the denitration performance of the denitration device provided on the downstream side is reduced. In other words, when the amount of the dropped urea water is increased and the urea water is accumulated on the downstream (bottom wall portion) of the tube, the urea water dropped on the bottom wall portion of the tube cools the inner surface of the tube because the circumferential wall of the tube is in contact with the outer air and the temperature outside is different from that inside the tube. Accordingly, the cyanuric acid is generated."

In ships operating under frequent load variations, it is difficult to constantly maintain an exhaust gas temperature and a catalyst temperature in an ideal manner. The solid byproducts are inevitably produced when the urea water is injected directly to the exhaust tube. In addition, it is difficult to open the exhaust tube for maintenance every time the ship is stopped. Thus, it is required to avoid the accumulation of the solid byproducts in the exhaust tube. When the solid byproducts are left without maintenance, the solid byproducts may be grown as time advances and the exhaust tube may be closed.

As described above, the titanium and vanadium denitration catalyst required for the nitration of the exhaust gas exhibits high activity when the exhaust gas temperature is 320 to 400°C. When the exhaust gas temperature is less than 320°C, the denitration catalyst is poisoned by ammonium bisulfate (acid ammonium sulfate) produced from sulfur oxide (SOx) and ammonia in the exhaust gas and thus the performance of the denitration device is remarkably reduced at approximately 250°C.

To avoid such a problem, the denitration device can be disposed on the upstream side of the turbocharger, with which the exhaust gas temperature of approximately 400°C can be expected in the marine two-cycle diesel engine. However, since the thermal capacity of the denitration device is large, the responsiveness of the turbocharger is reduced. The exhaust gas turbocharger may not follow when it is started or stopped or when the load is varied, causing hunting in an exhaust system and remarkably influencing the engine performance. Consequently, the ship may not be able to travel safely. The titanium and vanadium denitration catalyst is used when the exhaust gas temperature is generally on the order of 400°C as an upper limit value. When the catalyst is used at the exhaust gas temperature of more than 400°C, the catalyst may be inactivated by sintering and the life of the catalyst may be reduced. Thus, the system in which the denitration device is disposed on the upstream side of the turbocharger is not put into practice.

Japanese Unexamined Patent Application, Publication No. Hei5-285343 discloses a denitration device disposed on downstream of an exhaust gas turbocharger of a diesel engine, especially a marine two-cycle diesel engine, and using ammonia as a reducing agent. To put the technique, where a denitration catalyst used for a short time at low temperature can be regenerated from a low activity state to an original activity state by acid ammonium sulfate when the temperature is increased, into practical use, a denitration device storing the catalyst is divided into a plurality of flow paths and a damper is provided at an inlet on each flow path. Further, a high temperature gas injection nozzle is provided on upstream of the catalyst inside the damper at the inlet on each flow path for increasing the temperature and regenerating the activity state, so that high temperature gas is used by being extracted from an exhaust tube on upstream of the exhaust gas turbocharger of the diesel engine. However, a marine exhaust gas denitration device using ammonia as a reducing agent is not desired in terms of safety as described above. Thus, the technique disclosed in Japanese Unexamined Patent Application, Publication No. Hei5-285343 is not sufficient.

Given a global trend towards strict regulations placed in some sea areas on nitrogen oxides emitted from marine diesel engines, in such sea areas, residue oil having a sulfur content of 4.5% or less is being replaced with distillate oil having that of 0.1% or less, and a NOx emission limit will be possibly tightened to 80% from the level of the current regulation.

To provide a marine exhaust gas denitration device which can be used for a diesel engine having a low exhaust gas temperature, there are two problems to be solved. The first problem is that poisoning of a denitration catalyst by acid ammonium sulfate needs to be avoided even when the exhaust gas temperature is as low as 250°C by disposing the denitration device on downstream of an exhaust gas turbocharger. The second problem is that urea water having a urea content of 32.5% is used as a reducing agent. The first problem can be solved by using residue oil with a sulfur content of 0.1% or less. However, the second problem remains to be solved.

The present invention has been made in view of the above-described circumstances. It is an object to provide a marine exhaust gas denitration device for a marine diesel engine maintain the scavenging pressure of the diesel engine at an appropriate value. Further, clogging of a urea water injection nozzle or an exhaust tube can be prevented and poisoning of a denitration catalyst by acid ammonium sulfate can be avoided when urea water is used as a reducing agent for the denitration.

### {Solution to Problem}

This object is solved by an exhaust gas denitration system with the features of claim 1 and a method for controlling an exhaust gas denitration system with the features of claim 7. Preferred embodiments follow from the other claims. The exhaust denitration system of the invention, the ship equipped therewith, and the method for controlling the exhaust gas denitration system include the following:

According to an aspect of the present invention, an exhaust gas denitration system includes: an exhaust gas turbocharger driven by exhaust gas from a marine diesel engine; a reactor which produces ammonia from urea water; a urea water injection nozzle which supplies the urea water into the reactor; a denitration catalyst part which is provided in an exhaust gas path on a downstream side of the exhaust gas turbocharger and which denitrates the exhaust gas by using the ammonia supplied from the reactor; an exhaust gas bypass path through which a part of the exhaust gas, which is obtained by partly extracting the exhaust gas being supplied to the exhaust gas turbocharger from the marine diesel engine, flows into the reactor; and a scavenging pressure controller which controls scavenging pressure of the marine diesel engine in accordance with an amount of the exhaust gas flowing through the exhaust gas bypass path.

When a ship equipped with the exhaust gas denitration system travels in sea area where the NOx emission regulation is strict (ECA; Emission Control Area) for example, NOx emission is regulated. At this time, the exhaust gas flows into the exhaust gas bypass path to operate the reactor. However, when the NOx emission is not regulated, the exhaust gas is not required to be denitrated. Thus, the exhaust gas does not flow into the exhaust gas bypass path. At this time, the amount of the exhaust gas flowing into the exhaust gas turbocharger is increased as compared with when the exhaust gas flows into the exhaust gas bypass path. Accordingly, the capacity of the exhaust gas turbocharger is increased and may exceed the appropriate scavenging pressure of the engine. Thus, the scavenging pressure controller for controlling the scavenging pressure in accordance with the amount of the exhaust gas flowing through the exhaust gas bypass path is provided according to this aspect of the present invention.

In the exhaust gas denitration system according to this aspect of the present invention, the exhaust gas turbocharger is a variable displacement turbocharger and the scavenging pressure controller controls the scavenging pressure by controlling the capacity of the exhaust gas turbocharger.

As the exhaust gas turbocharger, a variable nozzle turbocharger such as a VG (Variable Geometry) turbocharger, a turbocharger switching an area of a flow path of exhaust gas flowing to a fixed turbine nozzle, or a turbocharger system having a plurality of turbochargers with different capacities in which the number of operated turbochargers is variable may be used. The capacity of the exhaust gas turbocharger is changed in accordance with the amount of the exhaust gas flowing into the exhaust gas bypass path in order to control the scavenging pressure to have an appropriate value. Specifically, when the exhaust gas flows into the exhaust gas bypass path, the amount of the exhaust gas flowing into the exhaust gas turbocharger is reduced and thus the capacity of the exhaust gas turbocharger is reduced. When the exhaust gas does not flow into the exhaust gas bypass path, the amount of the exhaust gas flowing into the exhaust gas turbocharger is increased and thus the capacity of the exhaust gas turbocharger is increased.

In the exhaust gas denitration system according to this aspect of the present invention, the exhaust gas turbocharger is a hybrid exhaust gas turbocharger which generates electric power by rotary force of an exhaust turbine shaft and includes a generator motor urging rotation of the exhaust turbine shaft, and the scavenging pressure controller controls the scavenging pressure by controlling an amount of power generation of the generator motor.

The amount of power generation of the hybrid exhaust gas turbocharger is changed in accordance with the amount of the exhaust gas flowing into the exhaust gas bypass path in order to control the scavenging pressure to have an appropriate value. Specifically, when the exhaust gas flows into the exhaust gas bypass path, the amount of the exhaust gas flowing into the exhaust gas turbocharger is reduced and thus the amount of the power generation of the generator motor is reduced. When the exhaust gas does not flow into the exhaust gas bypass path, the amount of the exhaust gas flowing into the exhaust gas turbocharger is increased and thus the amount of the power generation of the generator motor is increased.

The exhaust gas denitration system according to this aspect of the present invention further includes a turbocharger bypass path through which the exhaust gas flows from the marine diesel engine to bypass the exhaust gas turbocharger, in which the scavenging controller controls the scavenging pressure by adjusting the amount of the exhaust gas flowing through the turbocharger bypass path.

The amount of the exhaust gas flowing through the turbocharger bypass path is changed in accordance with the amount of the exhaust gas flowing into the exhaust gas bypass path in order to control the scavenging pressure to have an appropriate value. Specifically, when the exhaust gas flows into the exhaust gas bypass path, the amount of the exhaust gas directed to the exhaust gas turbocharger is reduced and thus the amount of the exhaust gas flowing into the turbocharger bypass path is reduced (preferably the flow rate of the exhaust gas is zero). When the exhaust gas does not flow into the exhaust gas bypass path, the amount of the exhaust gas flowing into the exhaust gas turbocharger is increased and thus the amount of the exhaust gas directed to the turbocharger bypass path is increased.

According to another aspect of the present invention, an exhaust gas denitration system includes: an exhaust gas turbocharger driven by exhaust gas from a marine diesel engine; a reactor which produces ammonia from urea water; a urea water injection nozzle which supplies the urea water into the reactor; a denitration catalyst part which is provided in an exhaust gas path on a downstream side of the exhaust gas turbocharger and which denitrates the exhaust gas by using the ammonia supplied from the reactor; an exhaust gas bypass path through which a part of the exhaust gas, which is obtained by partly extracting the exhaust gas being supplied to the exhaust gas turbocharger from the marine diesel engine, flows into the reactor; and a power turbine path which is switchably provided in parallel to the exhaust gas bypass path and in which a power turbine driven by the exhaust gas and generating electric power is provided.

By switchably providing the power turbine path in parallel to the exhaust gas bypass path, the exhaust gas can be caused to flow into the power turbine path instead of the exhaust gas bypass path when the denitration is not carried out. Thus, the variation of the flow rate of the exhaust gas flowing into the exhaust gas turbocharger can be prevented. Also, the power turbine is started by the exhaust gas flowing through the power turbine path to obtain electric power.

A ship according to another aspect of the present invention includes any exhaust gas denitration system as described above, in which the marine diesel engine is a propulsion engine.

In the ship equipped with the exhaust gas denitration system as described above, the denitration system is smoothly started and stopped inside and outside the emission control area (ECA).

According to another aspect of the present invention, a method for controlling an exhaust gas denitration system includes: an exhaust gas turbocharger driven by exhaust gas from a marine diesel engine; a reactor which produces ammonia from urea water; a urea water injection nozzle which supplies the urea water into the reactor; a denitration catalyst part which is provided in an exhaust gas path on a downstream side of the exhaust gas turbocharger and which denitrates the exhaust gas by using the ammonia supplied from the reactor; and an exhaust gas bypass path through which a part of the exhaust gas, which is obtained by partly extracting the exhaust gas being supplied to the exhaust gas turbocharger from the marine diesel engine, flows into the reactor, in which scavenging pressure of the marine diesel engine is controlled in accordance with an amount of the exhaust gas flowing into the exhaust gas bypass path.

When the ship equipped with the exhaust gas denitration system travels in sea area where the NOx emission regulation is strict (ECA; Emission Control Area) for example, NOx emission is regulated. At this time, the exhaust gas flows into the exhaust gas bypass path to operate the reactor. However, when the NOx emission is not regulated, the exhaust gas is not required to be denitrated. Thus, the exhaust gas does not flow into the exhaust gas bypass path. At this time, the amount of the exhaust gas flowing into the exhaust gas turbocharger is increased as compared with when the exhaust gas flows into the exhaust gas bypass path. Accordingly, the capacity of the exhaust gas turbocharger is increased and may exceed the appropriate scavenging pressure of the engine. Thus, the scavenging pressure is controlled in accordance with the amount of the exhaust gas flowing through the exhaust gas bypass path.

According to another aspect of the present invention, a method for controlling an exhaust gas denitration system includes: an exhaust gas turbocharger driven by exhaust gas from a marine diesel engine; a reactor which produces ammonia from urea water; a urea water injection nozzle which supplies the urea water into the reactor; a denitration catalyst part which is provided in an exhaust gas path on a downstream side of the exhaust gas turbocharger and which denitrates the exhaust gas by using the ammonia supplied from the reactor; an exhaust gas bypass path through which a part of the exhaust gas, which is obtained by partly extracting the exhaust gas being supplied to the exhaust gas turbocharger from the marine diesel engine, flows into the reactor; and a power turbine path which is switchably provided in parallel to the exhaust gas bypass path and in which a power turbine driven by the exhaust gas and generating electric power is provided, in which the exhaust gas flows into the exhaust gas bypass path when the exhaust gas is denitrated, and the exhaust gas flows into the power turbine path when the exhaust gas is not denitrated.

By switchably providing the power turbine path in parallel to the exhaust gas bypass path, the exhaust gas can be caused to flow into the power turbine path instead of the exhaust gas bypass path when the denitration is not carried out. Thus, the variation of the flow rate of the exhaust gas flowing into the exhaust gas turbocharger can be prevented. Also, the power turbine is started by the exhaust gas flowing through the power turbine path to obtain electric power.

### {Advantageous Effects of Invention}

According to the present invention, the part of the exhaust gas, which is obtained by partly extracting the exhaust gas being supplied to the exhaust gas turbocharger from the marine diesel engine, flows into the reactor and the reaction temperature in the reactor is increased. Thus, the generation of cyanuric acid during conversion of the urea water to the ammonia can be prevented, and the clogging of the urea water injection nozzle and the exhaust tube can be also prevented.

Since the exhaust gas flowing into the reactor or the exhaust gas inside the reactor is heated by the reactor exhaust gas heater, a desired reaction temperature can be obtained even when the exhaust gas temperature is low during the start of the engine and thus the temperature in the reactor is low. Thus, the generation of cyanuric acid can be prevented and the poisoning of the denitration catalyst by acid ammonium sulfate can be avoided.

### {Brief Description of Drawings}

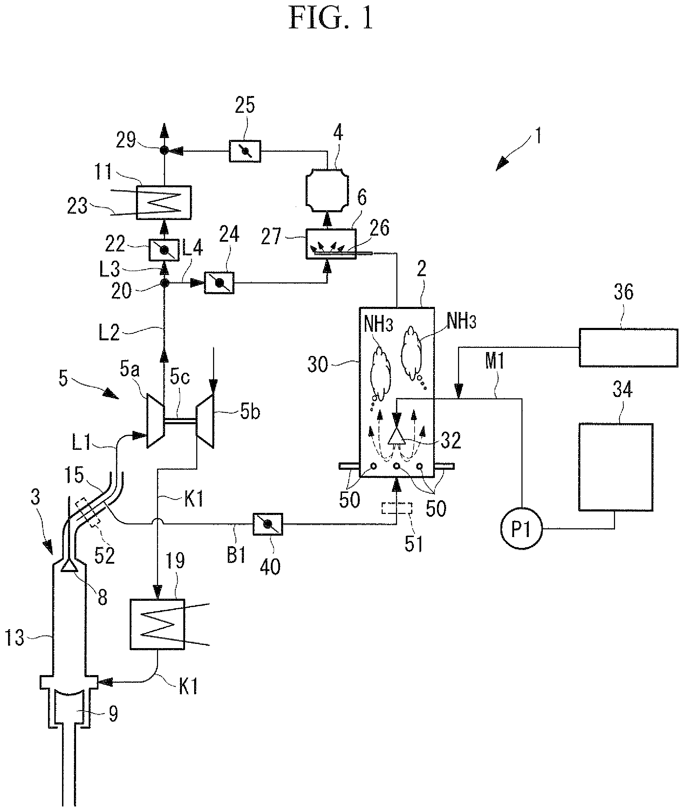

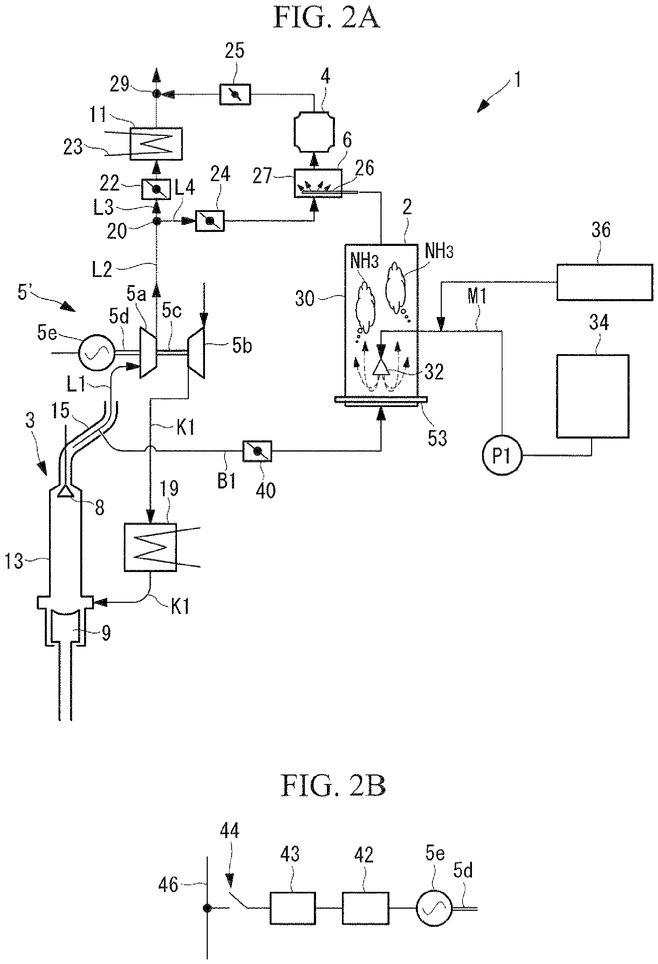

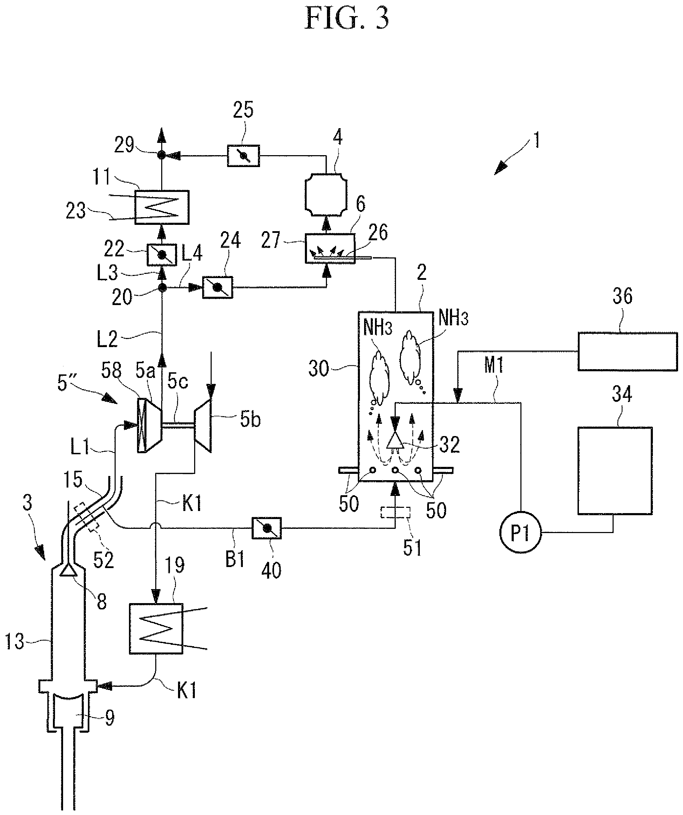

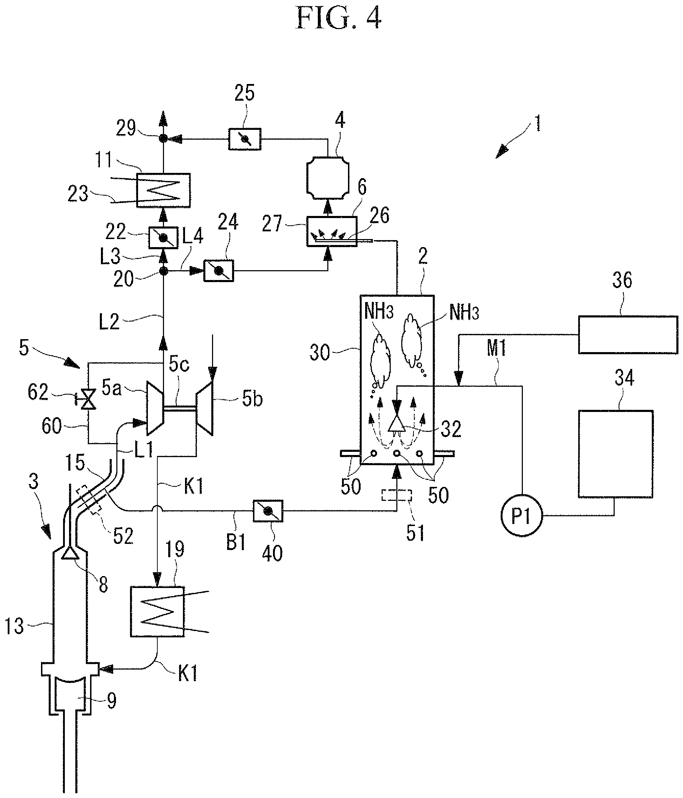

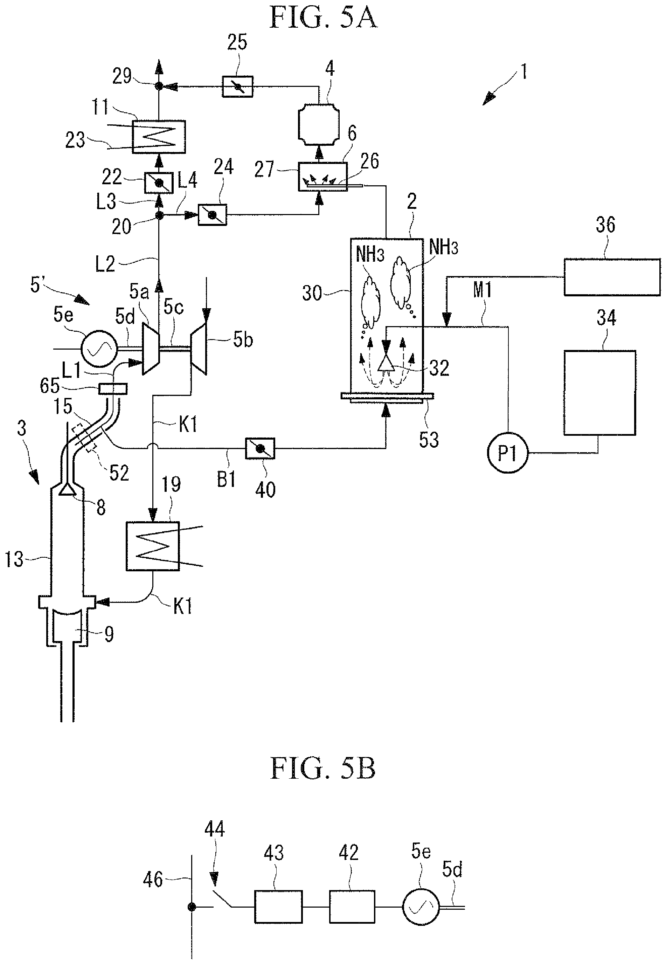

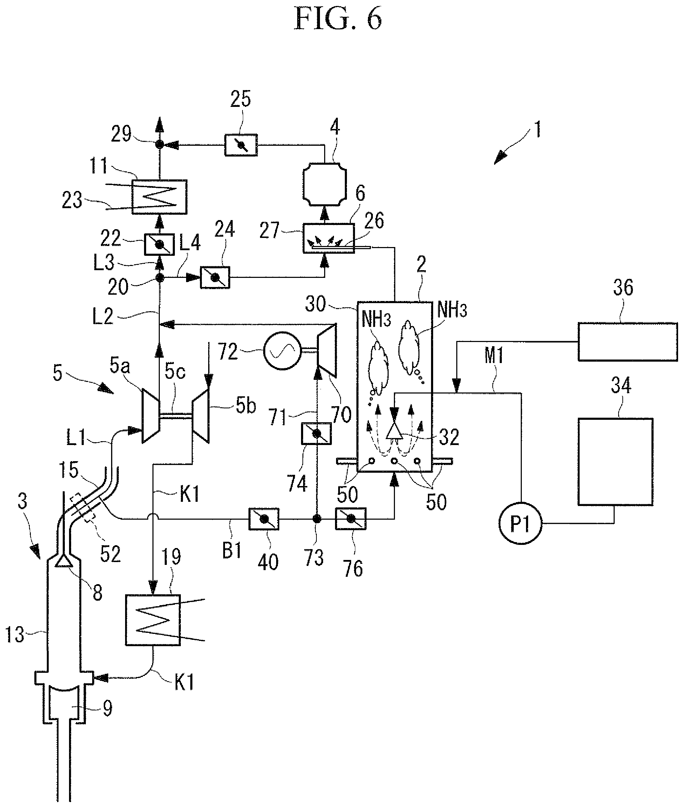

{Fig. 1} Fig. 1 is a schematic diagram showing an exhaust gas denitration system according to a first embodiment of the present invention.
{Fig. 2} Fig. 2A is a schematic diagram showing a main part of an exhaust gas denitration system according to a second embodiment of the present invention.
Fig. 2B is a schematic diagram showing a structure from a hybrid generator motor to an on-board electric system of the exhaust gas denitration system according to the second embodiment of the present invention.
{Fig. 3} Fig. 3 is a schematic diagram showing a first modification of the system shown in Fig. 2.
{Fig. 4} Fig. 4 is a schematic diagram showing a second modification of the system shown in Fig. 2.
{Fig. 5} Fig. 5A is a schematic diagram showing a main part of an exhaust gas denitration system according to a third embodiment, which is not part of the present invention.
Fig. 5B is a schematic diagram showing a structure from a hybrid generator motor to an on-board electric system of the exhaust gas denitration system according to the third embodiment, which is not part of the present invention.
{Fig. 6} Fig. 6 is a schematic diagram showing an exhaust gas denitration system according to a fourth embodiment of the present invention.

### {Description of Embodiments}

Embodiments of an exhaust gas denitration system, a ship equipped therewith, and a method for controlling the exhaust gas denitration system will be explained below with reference to the accompanying drawings.

### {First Embodiment}

Fig. 1 shows a schematic structure around a diesel engine 3 on which a marine exhaust gas denitration system 1 according to a first embodiment is provided.

The ship includes the diesel engine 3 serving as a propulsion engine, a denitration device 1 for denitrating exhaust gas discharged from the diesel engine 3, an exhaust gas turbocharger 5 driven by the exhaust gas of the diesel engine 3, and an exhaust gas economizer 11 for generating vapor by the exhaust gas from the diesel engine 3.

The diesel engine 3 is a marine two-cycle engine, which is a uniflow engine scavenged in one direction to supply air from a lower side and discharge the air to an upper side. The output of the diesel engine 3 is directly or indirectly connected to a screw propeller via a propeller shaft (not shown).

An exhaust port of each cylinder 13 (only one cylinder is shown in Fig. 1) of the diesel engine 3 is connected to an exhaust manifold 15 serving as an exhaust gas collecting tube. The exhaust manifold 15 is connected to an inlet side of a turbine 5a of the exhaust gas turbocharger 5 via a first exhaust path L1. The reference numeral 8 denotes an exhaust valve and the reference numeral 9 denotes a piston in Fig. 1.

A scavenging port of each cylinder 13 is connected to a scavenging trunk (not shown). A scavenging manifold is connected to a compressor 5b of the exhaust gas turbocharger 5 via an air supply path K1. Further, an air cooler (intercooler) 19 is provided in the scavenging path K1.

The exhaust gas turbocharger 5 includes the turbine 5a and the compressor 5b. The turbine 5a and the compressor 5b are coaxially connected to each other via a rotary shaft 5c. The turbine 5a is driven by the exhaust gas from the diesel engine 3, and the turbine work obtained at the turbine 5a is transmitted to the compressor 5b via the rotary shaft 5c. The compressor 5b sucks outer air, so that its pressure is increased to a predetermined scavenging pressure.

The exhaust gas imparting the turbine work at the turbine 5a flows to a second exhaust path L2. The second exhaust path L2 is branched to a third exhaust path L3 and a fourth exhaust path L4 at a branch point 20. The exhaust gas path is switched at the branch point 20 by an exhaust gas economizer-side opening and closing valve 22 provided in the third exhaust path L3 and a denitration-side opening and closing valve 24 provided in the fourth exhaust path L4. One of the opening and closing valves 22 and 24 is selected to open and close the exhaust gas path. When the ship sails in sea areas (Emission Control Area, hereinafter referred to as "ECA") where NOx emission is strictly regulated, exhaust gas is required to be denitrated. At this time, the denitration-side opening and closing valve 24 is opened and the exhaust gas economizer-side opening and closing valve 22 is closed. On the other hand, when the ship sails in sea areas other than the ECA where the regulation of NOx emission is relatively loose, the exhaust gas is not required to be denitrated. At this time, the denitration-side opening and closing valve 24 is closed and the exhaust gas economizer-side opening and closing valve 22 is opened.

One three-way valve can be used instead of the opening and closing valves 22 and 24.

The exhaust gas economizer 11 is connected to the downstream side of the exhaust gas economizer-side opening and closing valve 22 to generate steam by thermal exchange of the exhaust gas discharged from the diesel engine 3 and water supplied from a water supply tube 23. The generated steam is used at each part in the ship.

An ammonia supply part 6 for supplying ammonia gas generated by a later-described reactor 2 to the exhaust gas and a SCR catalyst part (denitration catalyst part) 4 used for selective catalytic reduction (SCR) method are connected in this order to the downstream side of the denitration-side opening and closing valve 24 on the fourth exhaust path L4.

The marine exhaust gas denitration system 1 includes the SCR catalyst part 4, the ammonia supply part 6, and the reactor 2 for generating ammonia gas from urea water.

In the SCR catalyst part 4, NOx contained in the exhaust gas is selectively reduced by the catalyst and decomposed into harmless nitrogen and steam. The exhaust gas denitrated in the SCR catalyst part 4 is mixed with the exhaust gas on the downstream side of the exhaust gas economizer 11 at an interflow point 29 on the downstream side and discharged to the outside from a funnel (not shown). A shut-off valve 25 is provided between the downstream side of the SCR catalyst part 4 and the interflow point 29. By closing the shut-off valve when the ship sails in sea areas where the NOx emission regulation is relatively loose, a part of exhaust gas having a high sulfur content not to flow to the denitration catalyst side to prevent the catalyst from being exposed.

The ammonia supply part 6 includes a mixing container 27, and an ammonia gas injection nozzle 26 with many injection holes provided in the mixing container 27. After ammonia gas injected from the ammonia gas injection nozzle 26 and exhaust gas flowing into the mixing container 27 are mixed, the mixed gas flows into the SCR catalyst part 4.

The reactor 2 includes a reactor container 30, and a urea water injection nozzle 32 with many injection holes. The urea water stored in a urea water tank 34 is supplied to the urea water injection nozzle 32 by a urea water pump P1. The compressed air supplied from a compressed air supply source 36 joins a urea water supply path M1 on the downstream side of the urea water pump P1 or the urea water injection nozzle 32.

Burners (reactor exhaust gas heater) 50 are provided on the upstream side of the reactor 2 (the lower side in the drawing). The plurality of burners 50 are disposed around the reactor 2. A fuel is supplied to each burner 50 from a fuel supply source (not shown), so that the exhaust gas in the reactor 2 is heated by flames formed in the reactor 2. Each burner 50 is started and stopped by a controller (not shown).

An exhaust gas bypass path B1 for extracting a part of the exhaust gas is provided between the reactor 2 and the exhaust manifold 15. A bypass control valve 40, which is controlled by a controller (not shown) to adjust the flow rate of the exhaust gas, is provided in the exhaust gas bypass path B1. The flow rate of the exhaust gas adjusted by the bypass control valve 40 is 5 to 20% of the exhaust gas from the diesel engine 3, preferably 10 to 15%.

Next, a method for controlling the marine exhaust gas denitration system 1 as described above will be explained below.

The exhaust gas discharged from the diesel engine 3 flows into the turbine 5a of the exhaust gas turbocharger 5 from the exhaust manifold 15 through the first exhaust path L1. The turbine 5a is rotated by the exhaust gas energy, so that the compressor 5b is also rotated. The compressor 5b compresses the sucked air (outer air) and sends the compressed air to the scavenging trunk of the diesel engine 3 via the air cooler 19.

The exhaust gas is not denitrated when the ship sails in sea areas other than the ECA. At this time, the exhaust gas economizer-side opening and closing valve 22 is opened, and the denitration-side opening and closing valve 24, the bypass control valve 40, and the shut-off valve 25 are closed.

The exhaust gas discharged from the turbine 5a of the exhaust gas turbocharger 5 flows through the second exhaust path L2, the branch point 20, and the third exhaust path L3, and then flows into the exhaust gas economizer 11 through the exhaust gas economizer-side opening and closing valve 22. In the exhaust gas economizer 11, water supplied from the water supply tube 23 is heated by the exhaust gas and steam is generated. The generated steam is used at each part in the ship. The exhaust gas discharged from the exhaust gas economizer 11 is discharged to the outside from a funnel (not shown).

On the other hand, the exhaust gas is denitrated when the ship sails in the ECA. At this time, the exhaust gas economizer-side opening and closing valve 22 is closed, and the denitration-side opening and closing valve 24, the bypass control valve 40, and the shut-off valve 25 are opened.

The opening degree of the bypass control valve 40 is appropriately adjusted by the command of the controller. After the flow rate of the exhaust gas is adjusted by the bypass control valve 40, the exhaust gas flows into the reactor 2 through the exhaust gas bypass path B1.

The exhaust gas flowing into the reactor 2 passes through the area where burners 50 are provided. The operation of the burners 50 is controlled as follows.

Since the exhaust gas temperature is low when the diesel engine 3 is started, the temperature of the exhaust gas flowing through the exhaust gas bypass path B1 is also low. Accordingly, even when the exhaust gas flows into the reactor through the exhaust gas bypass path B1, the reaction temperature in the reactor may not be increased to a desired value. Thus, when the diesel engine 3 is started, the burners 50 are started by the command of the controller (not shown), so that the flames are formed in the reactor 2 and the exhaust gas is heated by the combustion heat. Accordingly, the temperature in the reactor 2 is increased to a desired value.

When a predetermined time elapses after the diesel engine 3 is started, the operation of the burners 50 is stopped. It is because it can be judged that the exhaust gas temperature is increased to the desired value when the predetermined time elapses after the diesel engine 3 is started.

In the reactor 2, the compressed air supplied from the compressed air supply source 36 and the urea water flowing from the urea water tank 34 are injected from the urea water injection nozzle 32 to the exhaust gas passing through the area where the burners 50 are provided. Then, the urea water injected in the reactor 2 is converted into ammonia gas. The urea water is heated by the heat of the exhaust gas during this conversion reaction, and accordingly, generation of solid byproducts is prevented. The generated ammonia gas flows into the ammonia supply part 6 and is injected from the ammonia gas injection nozzle 26 to the exhaust gas.

The exhaust gas discharged from the turbine 5a of the exhaust gas turbocharger 5 flows through the second exhaust path L2, the branch point 20, and the fourth exhaust path L4, and then flows into the ammonia supply part 6. The exhaust gas mixed with the ammonia gas in the ammonia supply part 6 flows into the SCR catalyst part 4, and is denitrated in the SCR catalyst part 4. The denitrated exhaust gas flows through the interflow point 29 and discharged to the outside from a funnel (not shown).

The following advantageous effects can be obtained according to this embodiment.

Since a part of the exhaust gas being supplied from the two-cycle diesel engine 3 to the exhaust gas turbocharger 5 is extracted and flows into the reactor 2, the reaction temperature in the reactor 2 can be increased. Accordingly, the generation of the solid byproducts during the conversion of the urea water into the ammonia can be prevented. Thus, the urea water injection nozzle 32 and the exhaust tube positioned on downstream of the reactor 2 can be prevented from being closed.

Since the amount of the exhaust gas passing through the exhaust gas turbocharger 5 is reduced by extracting the part of the exhaust gas supplied to the exhaust gas turbocharger 5, the turbine work of the exhaust gas turbocharger 5 is reduced and the amount of air supplied to the diesel engine 3 is reduced. Accordingly, the exhaust gas temperature can be further increased. Thus, the generation of the solid byproducts can be further prevented.

Since the exhaust gas in the reactor 2 is heated by the burners 50, the reaction temperature in the reactor 2 can be increased. Accordingly, even when the exhaust gas temperature is low and the temperature in the reactor 2 is low during the start-up of the diesel engine 3, a desired reaction temperature can be obtained. In addition, the denitration catalyst can be prevented from being poisoned by acid ammonium sulfate.

Although the burners 50 are started when the diesel engine 3 is started according to the first embodiment, the present invention is not limited thereto. For example, the burners 50 may be started when the temperature in the reactor 2 or the temperature of the exhaust gas passing through the exhaust gas bypass path B1 is a predetermined value or less. At this time, it is preferable that a temperature sensor is provided in the reactor 2 or the exhaust gas bypass path B1 and the burners 50 are started and stopped in accordance with the output temperature of this temperature sensor.

Although the burners 50 are used to heat the exhaust gas in the reactor 2 according to the first embodiment, an electric heater may be used instead of the burners 50. The electric power in the ship is used as the electric power supplied to the electric heater. For example, the electric power obtained by the diesel engine for power generation, the electric power obtained by a later-described hybrid turbocharger, or the electric power obtained by a later-described power turbine may be used.

Although the burners 50 are disposed on upstream of the reactor 2, the position of the reactor exhaust gas heater such as the burners 50 and the electric heater is not limited thereto. For example, it may be disposed in the exhaust gas bypass path B1 as shown by the reference numeral 51 in Fig. 1. At this time, it is preferable that the reactor exhaust gas heater is provided near the reactor 2 to suppress temperature reduction after the heating. Alternatively, it may be provided in the main exhaust gas path before branching to the exhaust gas bypass path B1 as shown by the reference numeral 52 in Fig. 1.

### {Second Embodiment}

Next, a second embodiment of the present invention will be explained with reference to Figs. 2A and 2B.

In the second embodiment, a hybrid exhaust gas turbocharger (hereinafter referred to as "hybrid turbocharger 5'") is used instead of the exhaust gas turbocharger 5 used in the first embodiment. As shown in Fig. 2A, an electric heater 53 is used instead of the burners 50. Other structures are the same as in the first embodiment. Therefore, the same components are denoted by the same reference numerals and the detailed explanation thereof is omitted.

As shown in Fig. 2A, the hybrid turbocharger 5' includes a turbine 5a, a compressor 5b, and a hybrid generator motor 5e. The turbine 5a, the compressor 5b, and the hybrid generator motor 5e are coaxially connected to each other via a rotary shaft 5d.

The hybrid generator motor 5e generates electric power by the rotary output obtained in the turbine 5a, while spurring the rotating compressor 5b by the electric power obtained from an on-board electric system 46 (see Fig. 2B). As shown in Fig. 2B, a converter 42 converting AC power into DC power, an inverter 43 converting the DC power into the AC power, and an opening and closing switch 44 are provided in this order from the side close to the hybrid generator motor 5e between the hybrid generator motor 5e and the on-board electric system 46.

The electric power generated by the hybrid generator motor 5e can be supplied to the electric heater 53 provided in the reactor 2. Accordingly, the electric power collected in the hybrid turbocharger 5' can be used for denitrating the exhaust gas. Thus, a highly efficient denitration system can be provided.

In the second embodiment, the following control is conducted in addition to the control according to the first embodiment.

### {Scavenging Pressure Control}

To appropriately maintain the scavenging pressure of the diesel engine 3, the hybrid turbocharger 5' is controlled differently inside and outside the ECA. When the ship sails in the ECA, the NOx regulation is carried out and thus the exhaust gas flows into the exhaust gas bypass path B1 to operate the reactor 2. However, when the ship sails outside of the ECA, the NOx regulation is not carried out and thus the denitration is not required. Accordingly, the exhaust gas does not flow into the exhaust gas bypass path B1. At this time, the amount of the exhaust gas flowing into the hybrid turbocharger 5' is increased as compared when the exhaust gas flows into the exhaust gas bypass path B1 during travelling in the ECA. Therefore, the capacity of the exhaust gas turbocharger is increased and may exceed the appropriate scavenging pressure of the engine. Thus, in the second embodiment, the amount of power generation of the hybrid turbocharger 5' is changed in accordance with the amount of the exhaust gas flowing into the exhaust gas bypass path. More specifically, when the exhaust gas flows into the exhaust gas bypass path B1 during travelling in the ECA, the amount of the exhaust gas flowing into the hybrid turbocharger 5' is decreased and therefore the amount of power generation of the hybrid generator motor 5e is decreased as compared to when the ship sails outside of the ECA. On the other hand, when the exhaust gas does not flow into the exhaust gas bypass path B1 during travelling outside of the ECA, the amount of the exhaust gas flowing into the hybrid turbocharger 5' is increased. Accordingly, the amount of power generation of the hybrid generator motor 5e is increased as compared to when the ship sails in the ECA.

According to the second embodiment, the scavenging pressure of the diesel engine 3 can be maintained at an appropriate value even when the exhaust gas bypass path B1 is switched inside and outside of the ECA. Thus, the operation with low fuel consumption can be conducted.

### {Modification 1 of Second Embodiment}

As shown in Fig. 3, a variable nozzle turbocharger 5" such as VG (Variable Geometry) turbocharger may be used as a variable turbocharger instead of the hybrid turbocharger 5'. The variable nozzle turbocharger 5" includes a variable nozzle 58 that controls the flow rate of the exhaust gas flowing into the turbine 5a. The opening degree of the variable nozzle 58 is controlled by a controller (not shown).

In the modification shown in Fig. 3, the burners 50 are provided instead of the electric heater 53.

Even when the variable nozzle turbocharger 5" is used, the same control as the above-described scavenging pressure control is conducted. Specifically, when the exhaust gas flows into the exhaust gas bypass path B1, the amount of the exhaust gas flowing into the variable nozzle turbocharger 5" is decreased. Accordingly, the nozzle opening degree of the variable nozzle turbocharger 5" is reduced to decrease its capacity. On the other hand, when the exhaust gas does not flow into the exhaust gas bypass path B1, the amount of the exhaust gas flowing into the variable nozzle turbocharger 5" is increased. Accordingly, the nozzle opening degree of the variable nozzle turbocharger 5" is increased to increase its capacity.

As a variable turbocharger, a turbocharger switching an area of a flow path of exhaust gas flowing by a fixed turbine nozzle, or a turbocharger system having a plurality of turbochargers with different capacities in which the number of operated turbochargers is variable may be used. The same control as the above-described scavenging pressure control is conducted when these turbochargers are used.

### {Modification 2 of Second Embodiment}

As shown in Fig. 4, even when the variable turbocharger is not used, the scavenging pressure control can be conducted by providing a turbocharger bypass path 60 bypassing the exhaust gas turbocharger 5. The turbocharger bypass path 60 includes a turbocharger bypass valve 62.

The control is conducted as follows. When the exhaust gas flows into the exhaust gas bypass path B1, the amount of the exhaust gas heading to the exhaust gas turbocharger 5 is reduced. Accordingly, the turbocharger bypass valve 62 is closed to stop the flow of the exhaust gas toward the turbocharger bypass path 60. On the other hand, when the exhaust gas does not flow into the exhaust gas bypass path B1, the amount of the exhaust gas heading to the exhaust gas turbocharger 5 is increased. Accordingly, the turbocharger bypass valve 62 is opened to increase the amount of the exhaust gas flowing into the turbocharger bypass path 60.

The turbocharger bypass valve 62 is not limited to an opening and closing valve. It may be a control valve that can control the opening degree in accordance with the scavenging pressure.

### {Third Embodiment}

Next, a third embodiment not forming part of the present invention will be explained with reference to Figs. 5A and 5B. The third embodiment differs from the second embodiment shown in Fig. 2A in that a hybrid turbocharger burner 65 is provided. Other structures are the same as in the second embodiment. Therefore, the same components are denoted by the same reference numerals and the detailed explanation thereof is omitted.

The hybrid turbocharger burner 65 is provided on the upstream side of the turbine 5a of the hybrid turbocharger 5' and is used to heat the exhaust gas flowing into the turbine 5a. A fuel is supplied to the burner 65 from a fuel supply source (not shown). The exhaust gas is heated by combustion heat of flames formed by the burner 65. The burner 65 is started and stopped by a controller (not shown).

In the third embodiment, the following controls are conducted by the burner 65 provided on the upstream side of the hybrid turbocharger 5' in addition to the control described in the second embodiment.

### {Exhaust Gas Temperature Control by Burner}

When the exhaust gas temperature is low during the start-up of the diesel engine 3, the burner 65 is started by a controller (not shown). Thus, the temperature of the exhaust gas flowing into the SCR catalyst part 4 positioned on downstream of the hybrid turbocharger 5' can be increased.

### {Scavenging Pressure Increase at Engine Low Load by Burner}

When the load of the diesel engine 3 is low, the exhaust gas energy is low. Accordingly, the scavenging pressure may not be increased by the hybrid turbocharger 5'. According to the third embodiment, the burner 65 is started by the controller (not shown) when the load of the diesel engine 3 is a predetermined value or less. Accordingly, the exhaust gas flowing into the hybrid turbocharger 5' is heated and the scavenging pressure can be increased to a desired value. The burner 65 can be used as an alternative or an auxiliary means of a conventionally-provided auxiliary blower.

### {Scavenging Pressure Control by Burner}

The scavenging pressure of the diesel engine 3 is appropriately controlled by the start or stop of the burner 65.

When the ship sails in the ECA, the denitration is carried out. The exhaust gas flows into the exhaust gas bypass path B1 for starting the reactor 2, and thus the flow rate of the exhaust gas flowing into the hybrid turbocharger 5' is relatively reduced. Thus, the scavenging pressure may sink below an appropriate value. At this time, the burner 65 is started by the controller (not shown) to heat the exhaust gas, so that the scavenging pressure is increased to the appropriate value. On the other hand, the denitration is not carried out when the ship sails outside of the ECA. Accordingly, the necessary amount of the exhaust gas flows into the hybrid turbocharger 5' and thus the burner 65 is stopped.

### {Power Generation Amount Increase by Burner}

When the amount of power generation is reduced as compared to demand for electric power in the ship, the burner 65 is started by the controller (not shown). Then, the exhaust gas heated by the burner 65 flows into the hybrid turbocharger 5' and the amount of power generation of the hybrid turbocharger 5' is increased. The amount of electric power corresponding to the amount of the increased power generation is supplied to the on-board electric system 46.

Although the burner 65 is disposed on the upstream side of the hybrid turbocharger 5' and at the position after the junction where the main exhaust gas path is branched into the exhaust gas bypass path B1, as shown by the reference numeral 52 in Fig. 5A, the burner 65 may be disposed in the main exhaust gas path before branched into the exhaust gas bypass path B1. Even when the burner 52 is disposed at such a position, the temperature of the exhaust gas flowing into the hybrid turbocharger 5' can be increased. Thus, the above-described controls can be conducted. Also, when the burner 52 is disposed at such a position, the temperature of the exhaust gas flowing into the reactor 2 through the exhaust gas bypass path B1 can be also increased as described in the first embodiment.

### {Fourth Embodiment}

Next, a fourth embodiment of the present invention will be explained with reference to Fig. 6. The fourth embodiment differs from the first embodiment shown in Fig. 1 in that a power turbine 70 is provided. Other structures are the same as in the first embodiment. Therefore, the same components are denoted by the same reference numerals and the detailed explanation thereof is omitted.

The power turbine 70 is rotated by the exhaust gas, and its rotational energy is collected by a power turbine generator 72 as electric power. The electric power generated by the power turbine generator 72 is supplied to the on-board electric system via an electric power line (not shown).

The power turbine 70 is provided in a power turbine path 71 arranged in parallel to the exhaust gas bypass path B1. The power turbine path 71 is branched from a branch point 73 on the downstream side of the bypass control valve 40 in the exhaust gas bypass path B1 and mixed with the second exhaust path L2 on the downstream side of the exhaust gas turbocharger 5.

A reactor-side opening and closing valve 76 is provided on downstream of the branch point 73 of the exhaust gas bypass path B1. A power turbine-side opening and closing valve 74 is provided on upstream of the power turbine 70 in the power turbine path 71. By opening and closing the opening and closing valves 74 and 76, the exhaust gas flows into the reactor 2 or the power turbine 70. Incidentally, one three-way valve can be used instead of the opening and closing valves 74 and 76.

Since the denitration is carried out when the ship sails in the ECA, the power turbine-side opening and closing valve 74 is closed and the reactor-side opening and closing valve 76 is opened, so that the exhaust gas flows into the reactor 2. At this time, the power turbine 70 is not operated.

On the other hand, the denitration is not carried out when the ship sails outside of the ECA. Accordingly, the power turbine-side opening and closing valve 74 is opened and the reactor-side opening and closing valve 76 is closed, so that the exhaust gas flows into the power turbine 70. The power turbine 70 is driven by the exhaust gas, and the electric power is generated by the power turbine generator 72.

Even when the denitration is not carried out and the exhaust gas does not flow into the reactor 2, the exhaust gas flows into the power turbine 70. Thus, the variation of the flow rate of the exhaust gas flowing into the exhaust gas turbocharger 5 can be suppressed irrespective of denitration.

### {Reference Signs List}

- 1: marine exhaust gas denitration system
- 2: reactor
- 3: diesel engine (marine diesel engine)
- 4: SCR catalyst part (denitration catalyst part)
- 5: exhaust gas turbocharger
- 5': hybrid turbocharger
- 32: urea water injection nozzle
- 34: urea water tank
- 40: bypass control valve
- 50, 51, 52: burner
- 53: electric heater
- 65: hybrid turbocharger burner
- 70: power turbine
- 71: power turbine path
- B1: exhaust gas bypass path

## Claims

1. An exhaust gas denitration system, comprising:
an exhaust gas turbocharger (5; 5'; 5") driven by exhaust gas from a marine diesel engine (3); and
a denitration catalyst part which is provided in an exhaust gas path on a downstream side of the exhaust gas turbocharger (5; 5'; 5") and which denitrates the exhaust gas
**characterized in that** the system further comprises:
a reactor (2) which produces ammonia from urea water;
a urea water injection nozzle (32) which supplies the urea water into the reactor (2), wherein the denitration catalyst part (4) denitrates the exhaust gas by using the ammonia supplied from the reactor (2);
an exhaust gas bypass path (B1) through which a part of the exhaust gas, which is obtained by partly extracting the exhaust gas being supplied to the exhaust gas turbocharger (5; 5'; 5") from the marine diesel engine (3), flows into the reactor (2);
a bypass control valve (40) which adjusts a flow rate of the exhaust gas flowing through the exhaust gas bypass path (B1), and
a scavenging pressure controller which controls scavenging pressure of the marine diesel engine (3) in accordance with an amount of the exhaust gas flowing through the exhaust gas bypass path (B1),
wherein, when the amount of the exhaust gas flowing into the exhaust gas bypass path (B1) is reduced, the scavenging pressure controller reduces the scavenging pressure, and, when the amount of the exhaust gas flowing into the exhaust gas bypass path (B1) is increased, the scavenging pressure controller increases the scavenging pressure.

2. The exhaust gas denitration system according to claim 1, wherein the exhaust gas turbocharger (5) is a variable turbine nozzle area turbocharger, and the scavenging pressure controller controls the scavenging pressure by controlling a turbine nozzle area of the exhaust gas turbocharger (5).

3. The exhaust gas denitration system according to claim 1, wherein the exhaust gas turbocharger (5') is a hybrid exhaust gas turbocharger (5') which generates electric power by rotary force of an exhaust turbine shaft (5d) and includes a generator motor (5e) urging rotation of the exhaust turbine shaft (5d), and the scavenging pressure controller controls the scavenging pressure by controlling an amount of power generation of the generator motor (5c).

4. The exhaust gas denitration system according to claim 1, further comprising a turbocharger bypass path (b1) through which the exhaust gas flows from the marine diesel engine (3) to bypass the exhaust gas turbocharger (5), wherein
the scavenging controller controls the scavenging pressure by adjusting an amount of the exhaust gas flowing through the turbocharger bypass path (B1).

5. The exhaust gas denitration system according to claim 1, further comprising
a power turbine path (71) which is switchably provided in parallel to the exhaust gas bypass path and in which a power turbine (70) driven by the exhaust gas and generating electric power is provided.

6. A ship comprising the exhaust gas denitration system according to any one of claims 1 to 5, wherein the marine diesel engine is a propulsion engine.

7. A method for controlling an exhaust gas denitration system, comprising:
an exhaust gas turbocharger (5, 5') driven by exhaust gas from a marine diesel engine (3);
a reactor (2) which produces ammonia from urea water;
a urea water injection nozzle (32) which supplies the urea water into the reactor (2);
a denitration catalyst (4) part which is provided in an exhaust gas path on a downstream side of the exhaust gas turbocharger (5) and which denitrates the exhaust gas by using the ammonia supplied from the reactor (2);
an exhaust gas bypass path (B1) through which a part of the exhaust gas, which is obtained by partly extracting the exhaust gas being supplied to the exhaust gas turbocharger (5) from the marine diesel engine (3), flows into the reactor (2); and
a bypass control valve (40) which adjusts a flow rate of the exhaust gas flowing through the exhaust gas bypass path (B1),
wherein scavenging pressure of the marine diesel engine is controlled so that the scavenging pressure is reduced when the amount of the exhaust gas flowing into the exhaust gas bypass path is reduced, and that the scavenging pressure is increased when the amount of the exhaust gas flowing into the exhaust gas bypass path is increased.

8. The method for controlling an exhaust gas denitration system according to claim 7, the exhaust gas denitration system further comprising
a power turbine path (71) which is switchably provided in parallel to the exhaust gas bypass path (B1) and in which a power turbine (70) driven by the exhaust gas and generating electric power is provided, wherein
the exhaust gas flows into the exhaust gas bypass path (B1) when the exhaust gas is denitrated, and the exhaust gas flows into the power turbine path (71) when the exhaust gas is not denitrated.

## Patentansprüche

1. Abgas-Denitrierungssystem, umfassend:
einen Abgasturbolader (5; 5'; 5"), der durch Abgas von einem Schiffsdieselmotor (3) angetrieben wird; und
ein Denitrierungskatalysatorteil, das in einem Abgasweg auf einer stromabwärtigen Seite des Abgasturboladers (5; 5'; 5") vorgesehen ist, und das das Abgas denitriert;
**dadurch gekennzeichnet, dass** das System weiter folgendes umfasst:
einen Reaktor (2), der Ammoniak aus Harnstoff-Wasser erzeugt;
eine Harnstoff-Wassereinspritzdüse (32), die das Harnstoff-Wasser in den Reaktor (2) liefert, wobei das Denitrierungskatalysatorteil (4) das Abgas unter Verwendung des von dem Reaktor (2) gelieferten Ammoniaks denitriert;
einen Abgasumgehungsweg (B1), durch den ein Teil des Abgases, das durch teilweises Extrahieren des von dem Schiffsdieselmotor (3) zu dem Abgasturbolader (5; 5'; 5") gelieferten Abgases erhalten wird, in den Reaktor (2) strömt;
ein Umgehungssteuerventil (40), das eine Strömungsgeschwindigkeit des durch den Abgasumgehungsweg (B1) strömenden Abgases einstellt, und
eine Spüldrucksteuereinrichtung, die den Spüldruck des Schiffsdieselmotors (3) gemäß einer Menge des durch den Abgasumgehungsweg (B1) strömenden Abgases steuert,
wobei, wenn die Menge des in den Abgasumgehungsweg (B1) strömenden Abgases reduziert wird, die Spüldrucksteuereinrichtung den Spüldruck reduziert und, wenn die Menge des in den Abgasumgehungsweg (B1) strömenden Abgases erhöht wird, die Spüldrucksteuereinrichtung den Spüldruck erhöht.

2. Abgas-Denitrierungssystem nach Anspruch 1, wobei der Abgasturbolader (5) ein Turbolader mit variabler Turbinendüsenfläche ist und wobei die Spüldrucksteuereinrichtung den Spüldruck durch Steuern einer Turbinendüsenfläche des Abgasturboladers (5) steuert.

3. Abgas-Denitrierungssystem nach Anspruch 1, wobei der Abgasturbolader (5') ein Hybrid-Abgasturbolader (5') ist, der elektrische Leistung durch Drehkraft einer Abgasturbinenwelle (5d) erzeugt und der einen Generatormotor (5e) aufweist, der die Drehung der Abgasturbinenwelle (5d) bedingt, und wobei die Spüldrucksteuereinrichtung den Spüldruck durch Steuern einer Menge der Leistungserzeugung des Generatormotors (5c) steuert.

4. Abgas-Denitrierungssystem nach Anspruch 1, weiter umfassend einen Turboladerumgehungsweg (b1), durch welchen das Abgas von dem Schiffsdieselmotor (3) strömt, um den Abgasturbolader (5) zu umgehen, wobei
die Spülsteuereinrichtung den Spüldruck durch Einstellen einer Menge des Abgases, das durch Turboladerumgehungsweg (B1) strömt, steuert.

5. Abgas-Denitrierungssystem nach Anspruch 1, weiter umfassend
einen Leistungsturbinenweg (71), der schaltbar parallel zu dem Abgasumgehungsweg vorgesehen ist, und in dem eine Leistungsturbine (70) durch das Abgas angetrieben wird und eine Erzeugung elektrischer Leistung vorgesehen ist.

6. Schiff, umfassend das Abgas-Denitrierungssystem nach einem der Ansprüche 1 bis 5, wobei der Schiffsdieselmotor ein Antriebsmotor ist.

7. Verfahren zum Steuern eines Abgas-Denitrierungssystems, umfassend:
einen Abgasturbolader (5; 5'), der durch Abgas von einem Schiffsdieselmotor (3) angetrieben wird;
einen Reaktor (2), der Ammoniak aus Harnstoff-Wasser erzeugt;
eine Harnstoff-Wassereinspritzdüse (32), die das Harnstoff-Wasser in den Reaktor (2) liefert;
ein Denitrierungskatalysatorteil (4), das in einem Abgasweg auf einer stromabwärtigen Seite des Abgasturboladers (5) vorgesehen ist, und das das Abgas unter Verwendung des von dem Reaktor (2) gelieferten Ammoniaks denitriert;
einen Abgasumgehungsweg (B1), durch den ein Teil des Abgases, das durch teilweises Extrahieren des von dem Schiffsdieselmotor (3) zu dem Abgasturbolader (5) gelieferten Abgases erhalten wird, in den Reaktor (2) strömt; und
ein Umgehungssteuerventil (40), das eine Strömungsgeschwindigkeit des durch den Abgasumgehungsweg (B1) strömenden Abgases einstellt,
wobei ein Spüldruck des Schiffsdieselmotors gesteuert wird, so dass der Spüldruck reduziert wird, wenn die Menge des in den Abgasumgehungsweg strömenden Abgases reduziert wird, und so dass der Spüldruck erhöht wird, wenn die Menge des in den Abgasumgehungsweg strömenden Abgases erhöht wird.

8. Verfahren zum Steuern eines Abgas-Denitrierungssystems nach Anspruch 7, wobei das Abgas-Denitrierungssystem weiter umfasst
einen Leistungsturbinenweg (71), der schaltbar parallel zu dem Abgasumgehungsweg (B1) vorgesehen ist, und in dem eine Leistungsturbine (70) durch das Abgas angetrieben wird und eine Erzeugung elektrischer Leistung vorgesehen ist, wobei
das Abgas in den Abgasumgehungsweg (B1) strömt, wenn das Abgas denitriert ist, und das Abgas in den Leistungsturbinenweg (71) strömt, wenn das Abgas nicht denitriert ist.

## Revendications

1. Système de dénitruration de gaz d'échappement, comprenant :
un turbocompresseur de gaz d'échappement (5 ; 5' ; 5") entraîné par un gaz d'échappement provenant d'un moteur diesel marin (3) ; et
une partie de catalyseur de dénitruration qui est ménagée dans un chemin de gaz d'échappement sur un côté en aval du turbocompresseur de gaz d'échappement (5 ; 5' ; 5") et qui dénitrure le gaz d'échappement
**caractérisé en ce que** le système comprend en outre :
un réacteur (2) qui produit de l'ammoniac à partir d'une solution aqueuse d'urée ;
une buse d'injection de solution aqueuse d'urée (32) qui fournit la solution aqueuse d'urée dans le réacteur (2), dans lequel la partie de catalyseur de dénitruration (4) dénitrure le gaz d'échappement en utilisant l'ammoniac fourni à partir du réacteur (2) ;
un chemin de dérivation de gaz d'échappement (B1) à travers lequel une partie du gaz d'échappement, qui est obtenue par une extraction partielle du gaz d'échappement fourni au turbocompresseur de gaz d'échappement (5 ; 5' ; 5") à partir du moteur diesel marin (3), s'écoule dans le réacteur (2) ;
une valve de contrôle de dérivation (40) qui ajuste un débit du gaz d'échappement s'écoulant à travers le chemin de dérivation de gaz d'échappement (B1), et
un contrôleur de pression de récupération qui contrôle la pression de récupération du moteur diesel marin (3) conformément à une quantité du gaz d'échappement s'écoulant à travers le chemin de contournement de gaz d'échappement (B1),
dans lequel, quand la quantité des gaz d'échappement s'écoulant dans le chemin de dérivation de gaz d'échappement (B1) est réduite, le contrôleur de pression de récupération réduit la pression de récupération, et, quand la quantité du gaz d'échappement s'écoulant dans le chemin de dérivation de gaz d'échappement (B1) est accrue, le contrôleur de pression de récupération augmente la pression de récupération.

2. Système de dénitruration de gaz d'échappement selon la revendication 1, dans lequel le turbocompresseur de gaz d'échappement (5) est un turbocompresseur à superficie de buse de turbine variable, et le contrôleur de pression de récupération contrôle la pression de récupération en contrôlant une superficie de buse de turbine du turbocompresseur de gaz d'échappement (5).

3. Système de dénitruration de gaz d'échappement selon la revendication 1, dans lequel le turbocompresseur de gaz d'échappement (5') est un turbocompresseur de gaz d'échappement hybride (5') qui génère une alimentation électrique par une force rotative d'un arbre de turbine d'échappement (5d) et inclut un moteur de générateur (5e) poussant la rotation de l'arbre de turbine d'échappement (5d), et le contrôleur de pression de récupération contrôle la pression de récupération en contrôlant une quantité de génération d'électricité du moteur de générateur (5c).

4. Système de dénitruration de gaz d'échappement selon la revendication 1, comprenant en outre un chemin de contournement de turbocompresseur (b1) à travers lequel le gaz d'échappement s'écoule depuis le moteur diesel marin (3) pour contourner le turbocompresseur de gaz d'échappement (5), dans lequel
le contrôleur de récupération contrôle la pression de récupération en ajustant une quantité du gaz d'échappement s'écoulant à travers le chemin de contournement de turbocompresseur (B1).

5. Système de dénitruration de gaz d'échappement selon la revendication 1, comprenant en outre
un chemin de turbine électrique (71) qui est ménagé de manière commutable parallèlement au chemin de dérivation de gaz d'échappement et dans lequel une turbine électrique (70) est entraînée par les gaz d'échappement et la génération d'une alimentation électrique est fournie.

6. Bateau comprenant le système de dénitruration de gaz d'échappement selon l'une quelconque des revendications 1 à 5, dans lequel le moteur diesel marin est un moteur à propulsion.

7. Procédé de contrôle d'un système de dénitruration de gaz d'échappement comprenant :
un turbocompresseur de gaz d'échappement (5, 5') entraîné par un gaz d'échappement provenant d'un moteur diesel marin (3) ;
un réacteur (2) qui produit de l'ammoniac à partir d'une solution aqueuse d'urée ;
une buse d'injection de solution aqueuse d'urée (32) qui fournit la solution aqueuse d'urée dans le réacteur (2) ;
une partie de catalyseur de dénitruration (4) qui est fournie dans un chemin de gaz d'échappement sur un côté en aval du turbocompresseur de gaz d'échappement (5) et qui dénitrure le gaz d'échappement en utilisant l'ammoniac fourni à partir du réacteur (2) ;
un chemin de dérivation de gaz d'échappement (B1) à travers lequel une partie du gaz d'échappement, qui est obtenue en extrayant partiellement le gaz d'échappement fourni au turbocompresseur de gaz d'échappement (5) depuis le moteur diesel marin (3), s'écoule dans le réacteur (2); et
une valve de contrôle de dérivation (40) qui ajuste un débit du gaz d'échappement s'écoulant à travers le chemin de dérivation de gaz d'échappement (B1),
dans lequel la pression de récupération du moteur diesel marin est contrôlée de sorte que la pression de récupération soit réduite quand la quantité du gaz d'échappement s'écoulant dans le chemin de dérivation de gaz d'échappement est réduite, et que la pression de récupération est accrue quand la quantité de gaz d'échappement s'écoulant dans le chemin de dérivation de gaz d'échappement est accrue.

8. Procédé de commande d'un système de dénitruration de gaz d'échappement selon la revendication 7, le système de dénitruration de gaz d'échappement comprenant en outre
un chemin de turbine électrique (71) qui est ménagé de manière commutable parallèlement au chemin de dérivation de gaz d'échappement (B1) et dans lequel une turbine électrique (70) entraînée par le gaz d'échappement et générant l'alimentation électrique est fournie, dans lequel
le gaz d'échappement s'écoule dans le chemin de dérivation de gaz d'échappement (B1) quand le gaz d'échappement est dénitruré, et le gaz d'échappement s'écoule dans le chemin de turbine électrique (71) quand le gaz d'échappement n'est pas dénitruré.
